# EUROPÄISCHE PATENTANMELDUNG

(11) **EP 3 048 298 A1**
(43) Veröffentlichungstag der Anmeldung: **27.07.2016**
(21) Anmeldenummer: 16157800.0
(22) Anmeldetag: 17.07.2008
(51) Int. Cl.: F03D 7/04, F03D 9/00, H02J 3/38

(54) **VERFAHREN ZUR ERMITTLUNG EINER REGELUNGSRESERVE SOWIE WINDENERGIEANLAGE MIT EINER STEUEREINHEIT ZUR ERMITTLUNG DER REGELUNGSRESERVE**

(30) Priorität: 02.08.2007 DE 102007036446
(62) Teilanmeldung aus: 08012892.9
(71) Anmelder: Nordex Energy GmbH, 22419 Hamburg (DE)
(72) Erfinder: Jurkat, Mark, 22844 Norderstedt (DE)
(74) Vertreter: Hauck Patentanwaltspartnerschaft mbB

(57) **Zusammenfassung**

Verfahren zur Ermittlung einer Regelungsreserve von einer oder mehreren Windenergieanlagen, denen zum Betrieb ein Sollwert für mindestens eine elektrische Größe vorgegeben und für die eine Steuereinheit vorgesehen ist, die eine Leistungskurve aufweist, welche abhängig von Werten des Windes einen Maximalwert der elektrischen Größe enthält, das Verfahren weist folgende Schritte auf:
- Die Steuereinheit ermittelt über die Leistungskurve aus dem Istwert des Windes einen Maximalwert der elektrischen Größe und
- übermittelt den ermittelten Maximalwert an eine übergeordnete Steuereinheit und/oder an ein externes Energieversorgungsunternehmen, wobei anhand des aktuellen Werts einer elektrischen Größe über die Leistungskurve ein Istwert einer Regelungsreserve bestimmt wird.

## Beschreibung

Die vorliegende Erfindung betrifft ein Verfahren zur Ermittlung einer Regelungsreserve von einer oder mehreren Windenergieanlagen, denen zum Betrieb ein Sollwert für mindestens eine elektrische Größe vorgegeben ist.

Mit der zunehmenden Leistungsfähigkeit von Windenergieanlagen und deren Zusammenschluss zu Windparks besteht das Bedürfnis, die Einspeisung von elektrischer Leistung in das Stromnetz regeln bzw. steuern zu können. Bereits jetzt ist bekannt, Windenergieanlagen und Windparks mit einer gedrosselten Leistung zu betreiben, wenn keine höhere Leistung in das Netz eingespeist werden kann.

Der Erfindung liegt die Aufgabe zugrunde, ein Verfahren und eine Windenergieanlage bereitzustellen, die die Möglichkeiten bieten, bei einem gedrosselten Betrieb die vorhandene Regelungsreserve einer elektrischen Größe aktuell mit einfachen Mitteln abzuschätzen.

Die erfindungsgemäße Aufgabe wird durch ein Verfahren mit den Merkmalen aus Anspruch 1 und einen Windpark mit den Merkmalen des Anspruchs 11 gelöst.

Bei dem erfindungsgemäßen Verfahren wird eine Regelungsreserve von einer oder mehreren Windenergieanlagen ermittelt. Beim Betrieb der Windenergieanlagen liegt eine Regelungsreserve vor, wenn zum Betrieb der Windenergieanlage ein Sollwert für mindestens eine elektrische Größe vorgegeben ist, der kleiner als der mögliche maximale Wert ist. Die Steuereinheit, die die Regelungsreserve ermittelt, weist eine Leistungskurve auf, in der abhängig von Werten des Windes mindestens ein Maximalwert der elektrischen Größe abgelegt ist. Die Leistungskurve kann ganz oder teilweise gemessene Werte enthalten, es ist aber auch möglich, mit einer theoretischen Kennlinie, die anfänglich gesetzte Werte beinhaltet, zu arbeiten. Bei dem erfindungsgemäßen Verfahren ermittelt die Steuereinheit aus dem Istwert des Windes den Maximalwert der elektrischen Größe, der aktuell eingespeist werden könnte. Bei dem Maximalwert handelt es sich um einen über ein Zeitintervall gemittelten Wert, der im Betrieb auch kurzzeitig über- oder unterschritten werden könnte. Von diesem Maximalwert wird ein aktueller Wert der elektrischen Größe subtrahiert. Die von der Steuereinheit ermittelte Differenz wird als Regelungsreserve an eine übergeordnete Steuereinheit und/oder an ein externes Energieversorgungsunternehmen übermittelt. Bei dem erfindungsgemäßen Verfahren wird also anhand des aktuellen Werts einer elektrischen Größe und dem gemessenen Wind über die Leistungskurve der Istwert der Regelungsreserve bestimmt. Bei dem aktuellen Wert der elektrischen Größe kann es sich um den Istwert oder den Sollwert der elektrischen Größe handeln.

Als Regelungsreserve wird bevorzugt die positive Differenz angesehen, bei der die Windenergieanlage bzw. die Windenergieanlagen größere Werte der elektrischen Größe produzieren könnten als aufgrund der Sollwertvorgabe gegenwärtig zugelassen.

Bei dem erfindungsgemäßen Verfahren kann als elektrische Größe die erzeugte Wirkleistung vorgesehen sein. In diesem Zusammenhang wird die Regelungsreserve auch gelegentlich als Vorhaltewirkleistung bezeichnet. Alternativ oder zusätzlich kann als elektrische Größe die erzeugte Blindleistung abgestellt werden. Auch kann als elektrische Größe auf den Phasenwinkel und/oder den Leistungsfaktor abgestellt werden. Der Begriff der Leistungskurve bezieht sich also nicht ausschließlich auf eine bereitzustellende elektrische Leistung, sondern allgemein auf eine elektrische Größe und gibt für diese an, welcher maximale Wert geleistet werden kann.

In einer bevorzugten Ausgestaltung wird der Sollwert der elektrischen Größe von einer übergeordneten Steuereinheit vorgegeben werden. Eine Betriebssteuerung der Windenergieanlage oder eine Steuereinheit für mehrere Windenergieanlagen ermittelt aus dem vorgegebenen Sollwert bevorzugt die Sollwerte für die einzelnen Windenergieanlagen, die dann entsprechend umgesetzt werden.

In einer bevorzugten Ausführungsform wird bei dem relevanten Wert des Windes auf die Windgeschwindigkeit abgestellt. Dies bedeutet, dass in der Leistungskurve der maximale erzeugbare Wert der elektrischen Größe für die entsprechende Windgeschwindigkeit abgelegt ist.

In einzelnen Ausführungsbeispielen kann vorgesehen sein, dass die Windgeschwindigkeit an einem Wettermast gemessen wird, wobei der Wettermast zweckmäßigerweise in einer zur Messung der Windgeschwindigkeit günstigen Position relativ zu der oder den Windenergieanlagen aufgestellt ist.

Alternativ oder zusätzlich ist es auch möglich, dass die Windgeschwindigkeit an einer oder mehreren Windenergieanlagen gemessen wird.

Die erfindungsgemäße Aufgabe wird ebenfalls durch eine Windenergieanlage mit einer Steuereinheit und einer Betriebssteuerung gelöst. Die Steuereinheit ermittelt eine Regelungsreserve für eine elektrische Größe. Die Betriebssteuerung ist dafür vorgesehen, während des Betriebs der Windenergieanlage den Sollwert für mindestens eine elektrische Größe der einzuspeisenden Leistung vorzugeben. Ferner liegt an der Steuereinheit ein Istwert für die elektrische Größe und für den Wind an. Die erfindungsgemäße Steuereinheit zeichnet sich dadurch aus, dass sie eine Leistungskurve aufweist, die einen Maximalwert der elektrischen Größe abhängig von einem Wert des Windes angibt. Die Steuereinheit ermittelt die Differenz zwischen dem aktuellen Maximalwert und einem aktuellen Wert der elektrischen Größe. Diese Differenz bildet die Regelungsreserve. Die erfindungsgemäße Windenergieanlage kann mit der Steuereinheit und der Leistungskurve während eines gedrosselten Betriebs jederzeit angeben, wie groß die gegenwärtig abrufbare Reserve ist. Der aktuelle Wert der elektrischen Größe ist bevorzugt der Istwert oder der Sollwert der elektrischen Größe.

In einer bevorzugten Ausgestaltung ist die Windenergieanlage mit Mitteln zum Messen des Istwerts der elektrischen Größe ausgestattet.

Bevorzugt ist die elektrische Größe der Leistungskurve die erzeugte Wirkleistung der Windenergieanlage. Alternativ kann als elektrische Größe der Leistungskurve die erzeugte Blindleistung der Windenergieanlage vorgesehen sein. Es ist ebenfalls möglich, als elektrische Größe bei der Leistungskurve auf den Phasenwinkel und/oder den Leistungsfaktor abzustellen.

In einer bevorzugten Ausgestaltung erhält die Betriebssteuerung der Windenergieanlage den Sollwert für die elektrische Größe von einer übergeordneten Steuereinheit.

Es hat sich als zweckmäßig herausgestellt, in der Leistungskurve den Maximalwert der elektrischen Größe abhängig von der Windgeschwindigkeit abzulegen. Es ist jedoch durchaus auch denkbar, als Werte für den Wind und andere Größen wie beispielsweise Windrichtung, Luftdruck, Luftfeuchtigkeit etc. zusätzlich zu berücksichtigen.

Das erfindungsgemäße Verfahren kann besonders bevorzugt bei einem Windpark mit einer Vielzahl von Windenergieanlagen eingesetzt werden. Hierbei wird die Regelungsreserve der Windenergieanlagen nach dem erfindungsgemäßen Verfahren bestimmt. Eine Steuereinheit besitzt dabei mehrere Leistungskurven für einzelne Windenergieanlagen und/oder für Gruppen von Windenergieanlagen. In dem Windpark kann die erzeugte Leistung zentral im Windpark und/oder lokal gemessen werden, um die Regelungsreserve zu bestimmen. Auch können mehrere Steuereinheiten vorgesehen sein, die die ermittelten Regelungsreserven an eine übergeordnete Steuereinheit weiterleiten.

Die Erfindung wird nachfolgend an einem Beispiel näher erläutert. Es zeigt:
- Fig. 1: einen Windpark mit zwei Segmenten,
- Fig. 2: eine Leistungskurve, bei der die Wirkleistung über der Windgeschwindigkeit aufgetragen ist, und
- Fig. 3: ein Säulendiagramm für die Regelungsreserve innerhalb eines Windparks.

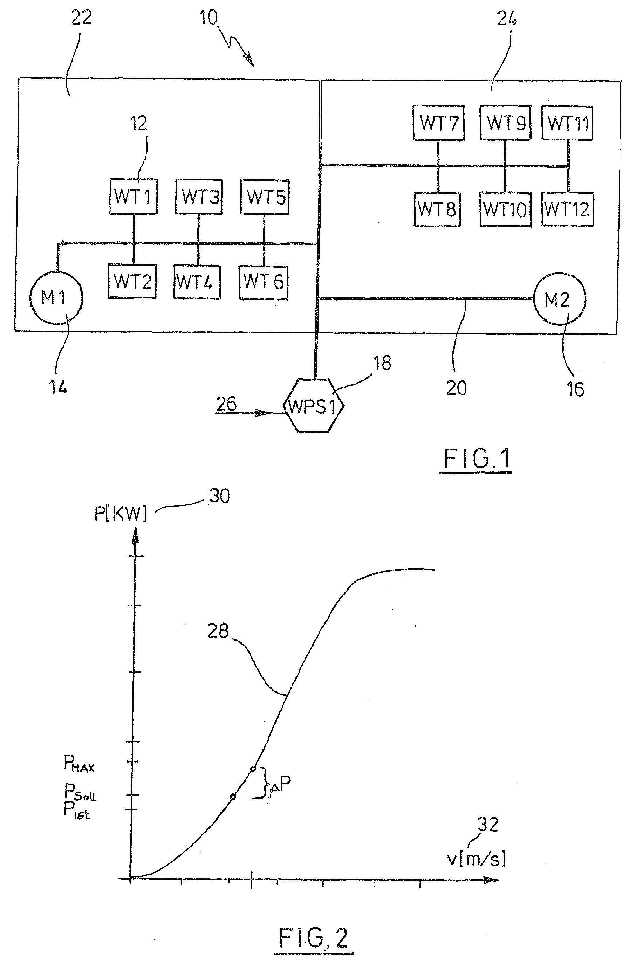

Fig. 1 zeigt in einer schematischen Ansicht einen Windpark 10 mit zwölf Windenergieanlagen 12, die als WT1 bis WT12 bezeichnet sind. Ferner sind in dem Windpark zwei Wettermasten 14 und 16 errichtet. Die in Figur 1 gezeigte Position der Wettermasten 14 und 16 spiegelt nicht unbedingt die relative Lage der Wettermasten zu den Windenergieanlagen 12 wieder. Über ein Kommunikationsnetzwerk 20 sind die Windenergieanlagen 12, die Wettermasten 14, 16 mit einer zentralen Windparksteuerung 18 verbunden. Über das Datennetzwerk 20 können Daten und Signale von den Windenergieanlagen 12, den Wettermasten 14 und 16 bidirektional mit der zentralen Windparksteuerung 18 ausgetauscht werden.

In dem in Figur 1 dargestellten Beispiel sind die Windenergieanlagen 12 in zwei Segmente 22 und 24 unterteilt, wobei dem ersten Segment 22 die Windenergieanlagen WT1 bis WT6 und dem zweiten Segment 24 die Windenergieanlagen WT7 bis WT12 zugeordnet sind. Von den Wettermasten ist der mit M1 gekennzeichnete Wettermast 14 dem ersten Segment 22 zugeordnet, während der mit M2 gekennzeichnete zweite Wettermast 16 dem zweiten Segment 24 zugeordnet ist.

In dem beschriebenen Ausführungsbeispiel liegt an der zentralen Windparksteuerung 18 ein extern vorgegebener Sollwert 26 für die maximal einzuspeisende Wirkleistung an. Die zentrale Windparksteuerung 18 ermittelt aus dem anliegenden Sollwert 26 jeweils Wirkleistungssollwerte für das erste Segment 22 und das zweite Segment 24. In einem nachfolgenden Schritt, der ebenfalls von der zentralen Windparksteuerung 18 ausgeführt werden kann oder der auf mehrere Steuerungen verteilt werden kann, werden aus dem für das Segment 22, 24 vorgegebenen Wirkleistungssollwert jeweils Sollwerte für die Windenergieanlagen WT1 bis WT6 bzw. WT7 bis WT12 ermittelt.

Unabhängig von der Verteilung der erzeugten Wirkleistung in den ersten und dem zweiten Segment ist für das gesamte Segment eine Leistungskurve in der zentralen Windparksteuerung 18 hinterlegt. Die Leistungskurve ist beispielhaft in Figur 2 dargestellt. Bei der dargestellten Leistungskurve 28 ist die Wirkleistung 30 der Windenergieanlagen eines Segments über der Windgeschwindigkeit 32 aufgetragen. In der dargestellten Auftragung über der absoluten Windgeschwindigkeit ist es auch denkbar, andere Einflußfaktoren des Windes zu berücksichtigen. So können beispielsweise unterschiedliche Leistungskurven abhängig von der Windrichtung hinterlegt sein. Auch ist es möglich, in jeder der Windenergieanlagen eine Leistungskurve für die Anlage zu hinterlegen und so für jede Anlage ihren Maximalwert zu ermitteln.

Bei der Bestimmung der Leistungsreserve ermittelt die Windparksteuerung den aktuellen Wert für den Wind v1 und bestimmt über die Leistungskurve 28 daraus den maximalen Leistungswert Pₘₐₓ. Gleichzeitig liegt der zentralen Windparksteuerung 18 ein ermittelter Sollwert für die in dem betrachteten Segment erzeugte Wirkleistung vor. Der Sollwert ist in Figur 2 beispielhaft als Pₛₒₗₗ eingezeichnet. Wie bereits angesprochen, besteht eine positive Leistungsreserve des Windparks bzw. des Segments des Windparks dann, wenn der Sollwert kleiner als der mögliche Maximalwert ist. Betrachtet man nun den Fall, dass der Betriebszustand der Windenergieanlage eingeregelt ist, so entspricht der Istwert der erzeugten Leistung dem vorgegebenen Sollwert. Um etwaige Verzögerungen beim Einregeln der Leistungswerte zu berücksichtigen, wird für die Ermittlung der Leistungsreserve auf den Istwert Pᵢₛₜ abgestellt. Die Differenz ΔP zwischen maximalem Leistungswert Pₘₐₓ und Istwert der Leistung Pᵢₛₜ ist in Figur 2 als ΔP eingezeichnet. ΔP ist diejenige Leistungsgröße, die bei konstanter Windgeschwindigkeit kurzfristig als Leistungsreserve bereitgestellt werden kann.

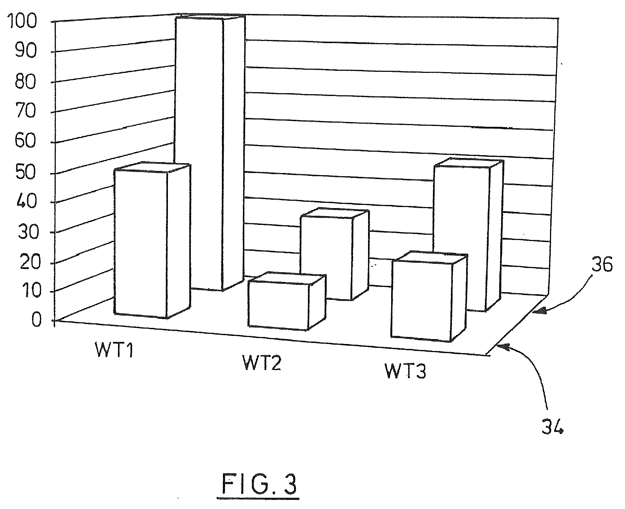

Figur 3 betrachtet den Fall, dass einzelnen Windenergieanlagen unterschiedliche Sollwerte für die Wirkleistung vorgegeben werden. So ist beispielsweise in Figur 3 der Windenergieanlage WT1 ein Leistungssollwert vorgegeben, der ungefähr 4 bis 5 Mal so groß ist wie der Leistungssollwert für die Windenergieanlage WT2. Die Leistungsistwerte der Windenergieanlagen sind als vordere Säulen 34 in Figur 3 dargestellt. Als hintere Säulen 36 sind in Figur 3 die maximal verfügbaren Leistungen der einzelnen Windenergieanlagen dargestellt. Deutlich zu erkennen in Figur 3 ist, dass die Leistungsistwerte 34 jeweils geringer sind als die mögliche Maximalleistung der Windenergieanlagen WT1 - WT3. Die Regelungsreserve bei dem in Figur 3 dargestellten Beispiel ergibt sich insgesamt aus der Summe der Regelungsreserven an den einzelnen Windenergieanlagen. Die notwendige Zeit, um die Regelungsreserve bereitzustellen, bestimmt sich hierbei aus der Zeit, die die regelungstechnisch langsamste Windenergieanlage braucht, um ihre Regelungsreserve abzurufen.

Beispiele und vorteilhafte Ausgestaltungen sind nachfolgend aufgeführt:
1. Verfahren zur Ermittlung einer Regelungsreserve von einer oder mehreren Windenergieanlagen, denen zum Betrieb ein Sollwert für mindestens eine elektrische Größe vorgegeben und für die eine Steuereinheit vorgesehen ist, die eine Leistungskurve aufweist, welche abhängig von Werten des Windes einen Maximalwert der elektrischen Größe enthält, das Verfahren weist folgende Schritte auf:
   - Die Steuereinheit ermittelt über die Leistungskurve aus dem Istwert des Windes einen Maximalwert der elektrischen Größe und subtrahiert hiervon einen aktuellen Wert der elektrischen Größe,
   - die Steuereinheit übermittelt den ermittelten Maximalwert und/oder die Differenz als Regelungsreserve an eine übergeordnete Steuereinheit und/oder an ein externes Energieversorgungsunternehmen.
2. Verfahren nach Nummer 1, dadurch gekennzeichnet, dass der aktuelle Wert der elektrischen Größe der Istwert der elektrischen Größe ist.
3. Verfahren nach Nummer 1, dadurch gekennzeichnet, dass der aktuelle Wert der elektrischen Größe der Sollwert der elektrischen Größe ist.
4. Verfahren nach einem der Nummern 1 bis 3, dadurch gekennzeichnet, dass als elektrische Größe die erzeugte Wirkleistung vorgesehen ist.
5. Verfahren nach einem der Nummern 1 bis 3, dadurch gekennzeichnet, dass als elektrische Größe die erzeugte Blindleistung vorgesehen ist.
6. Verfahren nach einem der Nummern 1 bis 3, dadurch gekennzeichnet, dass als elektrische Größe der Phasenwinkel und/oder der Leistungsfaktor vorgesehen ist.
7. Verfahren nach einem der Nummern 1 bis 6, dadurch gekennzeichnet, dass der Sollwert der elektrischen Größe von einer übergeordneten Steuereinheit vorgegeben wird.
8. Verfahren nach einem der Nummern 1 bis 7, dadurch gekennzeichnet, dass als Wert des Windes die Windgeschwindigkeit gemessen wird.
9. Verfahren nach Nummer 8, dadurch gekennzeichnet, dass die Windgeschwindigkeit an einem Wettermast gemessen wird.
10. Verfahren nach Nummer 8 oder 9, dadurch gekennzeichnet, dass die Windgeschwindigkeit an einer oder mehreren der Windenergieanlagen gemessen wird.
11. Windenergieanlage mit einer Steuereinheit, die eine Regelungsreserve für eine elektrische Größe ermittelt, und mit einer Betriebssteuerung, die für den Betrieb der Windenergieanlage den Sollwert für mindestens eine elektrische Größe vorgibt, wobei an der Steuereinheit ein aktueller Wert für die elektrische Größe und für den Wind anliegt, dadurch gekennzeichnet, dass die Steuereinheit eine Leistungskurve aufweist, die einen Maximalwert der elektrischen Größe abhängig von dem Wert des Windes angibt und als Regelungsreserve die Differenz zwischen dem Maximalwert und einen aktuellen Wert der elektrischen Größe bestimmt.
12. Windenergieanlage nach Nummer 11, dadurch gekennzeichnet, dass der aktuelle Wert der elektrischen Größe der Istwert der elektrischen Größe ist.
13. Windenergieanlage nach Nummer 11, dadurch gekennzeichnet, dass der aktuelle Wert der elektrischen Größe der Sollwert der elektrischen Größe ist.
14. Windenergieanlage nach einem der Nummern 11 bis 13, dadurch gekennzeichnet, dass die Windenergieanlage mit Mitteln zum Messen des Istwerts der elektrischen Größe ausgestattet ist.
15. Windenergieanlage nach einem der Nummern 11 bis 14, dadurch gekennzeichnet, dass die elektrische Größe der Leistungskurve die Wirkleistung der Windenergieanlage ist.
16. Windenergieanlage nach einem der Nummern 11 bis 14, dadurch gekennzeichnet, dass die elektrische Größe der Leistungskurve die Blindleistung der Windenergieanlage ist.
17. Windenergieanlage nach einem der Nummern 11 bis 14, dadurch gekennzeichnet, dass die elektrische Größe der Leistungskurve der Phasenwinkel und/oder der Leistungsfaktor der Windenergieanlage ist.
18. Windenergieanlage nach einem der Nummern 11 bis 17, dadurch gekennzeichnet, dass die Betriebssteuerung den Sollwert für die elektrische Größe von einer übergeordneten Steuereinheit erhält.
19. Windenergieanlage nach einem der Nummern 11 bis 18, dadurch gekennzeichnet, dass in der Leistungskurve der Maximalwert der elektrischen Größe abhängig von der Windgeschwindigkeit gelegt ist.
20. Windpark mit einer Vielzahl von Windenergieanlagen, deren Regelungsreserve nach dem Verfahren gemäß den Nummern 1 bis 10 bestimmt wird, dadurch gekennzeichnet, dass eine Steuereinheit mit mehreren Leistungskurven für einzelne Windenergieanlagen und/oder Gruppen von Windenergieanlagen vorgesehen ist.
21. Windpark nach Nummer 20, dadurch gekennzeichnet, dass die einzutragende Leistung zentral im Windpark gemessen wird.
22. Windpark nach Nummer 20 oder 21, dadurch gekennzeichnet, dass mindestens eine Windenergieanlage ihre einzutragende Leistung misst.
23. Windpark nach Nummer 20 bis 22, dadurch gekennzeichnet, dass mehrere Steuereinheiten vorgesehen sind, denen eine Steuereinheit übergeordnet ist, an der die Regelungsreserven der Steuereinheit anliegen.

## Patentansprüche

1. Verfahren zur Ermittlung einer Regelungsreserve von einer oder mehreren Windenergieanlagen, denen zum Betrieb ein Sollwert für mindestens eine elektrische Größe vorgegeben und für die eine Steuereinheit vorgesehen ist, die eine Leistungskurve aufweist, welche abhängig von Werten des Windes einen Maximalwert der elektrischen Größe enthält, das Verfahren weist folgende Schritte auf:
- Die Steuereinheit ermittelt über die Leistungskurve aus dem Istwert des Windes einen Maximalwert der elektrischen Größe und
- übermittelt den ermittelten Maximalwert an eine übergeordnete Steuereinheit und/oder an ein externes Energieversorgungsunternehmen, wobei anhand des aktuellen Werts einer elektrischen Größe über die Leistungskurve ein Istwert einer Regelungsreserve bestimmt wird.

2. Verfahren nach Anspruch 1, **dadurch gekennzeichnet, dass** der aktuelle Wert der elektrischen Größe der Istwert der elektrischen Größe ist.

3. Verfahren nach Anspruch 1, **dadurch gekennzeichnet, dass** der aktuelle Wert der elektrischen Größe der Sollwert der elektrischen Größe ist.

4. Verfahren nach einem der Ansprüche 1 bis 3, **dadurch gekennzeichnet, dass** als elektrische Größe die erzeugte Wirkleistung vorgesehen ist.

5. Verfahren nach einem der Ansprüche 1 bis 3, **dadurch gekennzeichnet, dass** als elektrische Größe die erzeugte Blindleistung vorgesehen ist.

6. Verfahren nach einem der Ansprüche 1 bis 3, **dadurch gekennzeichnet, dass** als elektrische Größe der Phasenwinkel und/oder der Leistungsfaktor vorgesehen ist.

7. Verfahren nach einem der Ansprüche 1 bis 6, **dadurch gekennzeichnet, dass** der Sollwert der elektrischen Größe von einer übergeordneten Steuereinheit vorgegeben wird.

8. Verfahren nach einem der Ansprüche 1 bis 7, **dadurch gekennzeichnet, dass** als Wert des Windes die Windgeschwindigkeit gemessen wird.

9. Verfahren nach Anspruch 8, **dadurch gekennzeichnet, dass** die Windgeschwindigkeit an einem Wettermast (14, 16) gemessen wird.

10. Verfahren nach Anspruch 8 oder 9, **dadurch gekennzeichnet, dass** die Windgeschwindigkeit an einer oder mehreren der Windenergieanlagen gemessen wird.

11. Windpark mit einer Vielzahl von Windenergieanlagen, deren Regelungsreserve nach dem Verfahren gemäß den Ansprüchen 1 bis 10 bestimmt wird, **dadurch gekennzeichnet, dass** eine Steuereinheit (18) mit mehreren Leistungskurven für einzelne Windenergieanlagen und/oder Gruppen von Windenergieanlagen vorgesehen ist.

12. Windpark nach Anspruch 11, **dadurch gekennzeichnet, dass** die erzeugte Leistung zentral im Windpark gemessen wird.

13. Windpark nach Anspruch 11 oder 12, **dadurch gekennzeichnet, dass** mindestens eine Windenergieanlage ihre erzeugte Leistung misst.

14. Windpark nach einem der Ansprüche 11 bis 13, **dadurch gekennzeichnet, dass** mehrere Steuereinheiten vorgesehen sind, denen eine Steuereinheit übergeordnet ist, an der die Regelungsreserven der Steuereinheit (18) anliegen.
